# FASCICULE DE BREVET EUROPEEN

(11) **EP 0 532 388 B1**
(45) Date de publication et mention de la délivrance du brevet: **14.01.1998**
(21) Numéro de dépôt: 92402402.9
(22) Date de dépôt: 03.09.1992
(51) Int. Cl.: H04B 10/18, G02B 6/16

(54) **Ligne de communication optique à grande distance et son procédé de réalisation**
Optische Fernübertragungsleitung und Verfahren zu ihrer Herstellung
Long distance optical communication line and method of making the same

(30) Priorité: 06.09.1991 FR 9111076
(43) Date de publication de la demande: 17.03.1993
(73) Titulaire: ALCATEL ALSTHOM COMPAGNIE GENERALE D'ELECTRICITE, 75008 Paris (FR)
(72) Inventeur: Prigent, Laurence, F-91180 Saint Germain les Arpajon (FR); Audouin, Olivier, F-91600 Savigny sur Orge (FR)
(74) Mandataire: Bourely, Paul

(56) Documents cités:
- EP-A- 0 464 812
- US-A- 4 261 639
- PATENT ABSTRACTS OF JAPAN vol. 7, no. 156 (P-209)(1301) 8 Juillet 1983 & JP-A-58 066 901
- PATENT ABSTRACTS OF JAPAN vol. 6, no. 225 (P-154)(1103) 10 Novembre 1982 & JP-A-57 125 903
- JOURNAL OF LIGHTWAVE TECHNOLOGY vol. 9, no. 3, Mars 1991, NEW YORK US pages 356 - 361 , XP206865 D. MARCUSE 'Single-Channel operation in very long nonlinear fibers with optical amplifiers at zero dispersion'

## Description

La présente invention concerne la réalisation d'une ligne de communication optique à grande distance. Une telle ligne peut être par exemple constituée par 200 fibres optiques longues chacune de 20 km et raccordées en série.

Les fibres disponibles dans le commerce pour cette réalisation présentent, aux longueurs d'onde utilisée, des dispersions chromatiques qui déforment les signaux transmis.

Dans le cas où ces dispersions constituent le seul phénomène perturbateur apparaissant sur la ligne, la déformation qui en résulte pour un signal en sortie de ligne constitue une déformation primaire qui peut être aisément calculée, lorsque ce signal est défini, en fonction des longueurs des fibres de la ligne et de leurs coefficients de dispersion. Une telle déformation primaire peut être exactement compensée par utilisation d'un élément compensateur de dispersion créant une dispersion chromatique opposée à celle de la ligne. Mais, dans la pratique, la dispersion se combine, dans la longueur de la ligne, avec des effets non linéaires tels qu'un élément compensateur de dispersion ne peut avoir qu'une efficacité qui est d'autant plus limitée que les dispersions chromatiques des fibres utilisées présentent une dispersion statistique plus forte. Il en résulte des inconvénients tels que des taux d'erreurs de transmission génants et/ou une limitation du débit d'information transmis par la ligne.

Plusieurs dispositions sont connues en association avec l'utilisation d'un élément compensateur de dispersion pour limiter ces inconvénients.

Une telle disposition est connue par le document D. Marcuse Journal of Lightwave technologie. Vol 9. N°1. Jan 1991. Selon cette disposition on utilise seulement des fibres présentant une dispersion dite normale qui est relativement peu sensible à la dispersion statistique de la dispersion chromatique. Mais il subsiste une déformation due à cette dispersion de la dispersion chromatique principalement lorsque la distance couverte par la liaison augmente.

Une autre telle disposition consiste à ne conserver que les fibres dont la dispersion chromatique est proche d'une valeur moyenne donnée. Mais cette disposition est coûteuse parce qu'elle fait gaspiller un certain nombre de fibres.

Une autre telle disposition encore consiste en un classement et un raccordement des fibres par ordre de dispersion chromatique croissant au fur et à mesure de la décroissance de l'amplitude de l'onde optique portant le signal à transmettre. Cette disposition est décrite dans le document D.Marcuse Journal of Ligtwave technologie vol 9. N°3. March 1991.

On connait aussi du document US-A-4 261 639 de faire la somme algébrique des dispersions des fibres de la ligne pour une longueur d'onde de travail et on incorpore dans la ligne des fibres réalisées et choisies pour rendre cette somme aussi faible que possible. Cela est couteux parce que cela exige de fabriquer des fibres ayant des dispersions du signe opposé à celui des fibres usuelles qui sont les plus économiques.

Ces dispositions connues n'ont qu'une efficacité limitée.

La présente invention a notamment pour but de réaliser d'une manière simple et économique une ligne permettant de limiter les inconvénients précédemment indiqués.

Dans ce but elle enseigne notamment de grouper les fibres de la ligne à réaliser en paires telles que les deux fibres d'une même paire présentent des dispersions chromatiques sensiblement symétriques par rapport à une valeur moyenne de la dispersion chromatique des fibres de la ligne, ces deux fibres étant raccordées de manière consécutive dans la ligne.

On va maintenant décrire plus particulièrement comment cette invention peut être mise en oeuvre.

Le procédé selon l'invention comporte des opérations connues dont la première est un rassemblement de fibres optiques permettant de constituer ultérieurement ladite ligne par raccordement de ces fibres en série. Chacune de ces fibres présente une dispersion de nature chromatique propre à cette fibre de sorte que l'ensemble de ces fibres présente une dispersion moyenne et que les dispersions de ces fibres présentent, au moins pour une majorité de celles-ci, des écarts de dispersion par rapport à cette valeur moyenne. Ces écarts ont des valeurs absolues et les uns un signe algébrique positif, les autres un signe algébrique négatif opposé à ce signe positif.

Une deuxième opération connue est le raccordement de ces fibres en série. Ce raccordement forme une succession de fibres présentant un ordre de succession à partir d'une origine de cette ligne. Il forme aussi une succession de connexions qui est associée à celle de ces fibres, deux fibres consécutives quelconques étant raccordée par une connexion. Dans l'ensemble de ces deux successions une fibre quelconque suit à la fois une connexion et une fibre précédentes, et elle précéde à la fois une connexion et une fibre suivantes. Chaque connexion est donc associée à un écart de dispersion cumulé qui est la somme algébrique des écarts de dispersion des fibres situées entre ladite origine et cette connexion et qui peut lui aussi avoir l'un ou l'autre des deux dits signes algébriques.

Selon un aspect de cette invention, lors de l'opération de raccordement, on réalise un ordre de succession des fibres qui donne, aux écarts de dispersion cumulés, une valeur absolue maximale inférieure à 50 % et de préférence à 10 % de la valeur moyenne des valeurs absolues maximales qui seraient données aux écarts de dispersion cumulés par tous les ordres de succession possibles de ces mêmes fibres.

Cette valeur absolue maximale est en fait rendue aussi petite que pratiquement possible.

Plus particulièrement ce procédé comporte, entre lesdites opérations de rassemblement et de raccordement, une opération de classement par laquelle on classe les fibres en au moins quatre classes de dispersion disjointes comportant chacune les fibres dont les écarts de dispersion ont un signe algébrique de cette classe et ont des valeurs absolues comprises entre une borne inférieure et une borne supérieure de cette classe, chaque classe d'un signe algébrique étant symétrique d'une autre classe ayant le signe algébrique opposé et les mêmes bornes inférieure et supérieure. Cette opération de classement est suivie d'une opération d'appairage au cours de laquelle 80 % au moins desdites fibres sont appariées en paires de régularisation de dispersion, chacune de ces paires étant constituée de deux fibres qui appartiennent à deux classes symétriques l'une de l'autre. Enfin l'opération de raccordement raccorde directement l'une à l'autre les deux fibres de chaque paire. Bien entendu elle raccorde aussi les paires les unes aux autres.

Les classes de dispersion peuvent par exemple être au nombre de 50 et comporter chacune quatre fibres. Mais il est clair que, selon les fibres dont on dispose, il peut être nécessaire de s'écarter quelque peu des règles de classement et de raccordement précédemment indiquées.

L'essentiel est que le but recherché à l'aide de ces règles de classement et de raccordement soit approximativement atteint, ce but étant que la dispersion chromatique cumulée croisse, à partir d'une extrémité origine de la ligne, d'une manière aussi régulière que possible.

Il a été en effet trouvé qu'en présence d'effets non linéaires dans la ligne, la qualité du signal transmis par la ligne était ainsi améliorée, après éventuellement une compensation terminale partielle ou totale de la dispersion cumulée, à l'aide d'une fibre de type différent présentant une dispersion de signe opposé, et/ou après filtrage, selon des techniques connues.

La présente invention a également pour objet une ligne réalisée selon les indications précédentes.

## Revendications

1. Procédé de réalisation d'une ligne de communication optique à grande distance, ce procédé comportant les opérations suivantes :
- rassemblement de fibres optiques en un nombre n supérieur à 100 présentant sensiblement une même longueur et permettant de constituer ultérieurement ladite ligne par raccordement de ces fibres en série, chacune de ces fibres présentant une dispersion de nature chromatique propre à cette fibre de sorte que l'ensemble de ces fibres présente une dispersion moyenne et que les dispersions de ces fibres présentent, au moins pour une majorité de celles-ci, des écarts de dispersion par rapport à cette valeur moyenne, ces écarts ayant des valeurs absolues et ayant les uns un signe algébrique positif, les autres un signe algébrique négatif,
- un raccordement de ces fibres en série en formant à la fois une succession de fibres présentant un ordre de succession à partir d'une origine de cette ligne, et une succession de connexions associée à celle de ces fibres, deux fibres consécutives quelconques étant raccordées par une connexion, une fibre quelconque suivant à la fois une connexion et une fibre précédentes, et précédant à la fois une connexion et une fibre suivantes, de sorte que chaque connexion est associée à un écart de dispersion cumulé qui est la somme algébrique des écarts de dispersion des fibres situées entre ladite origine et cette connexion et qui peut lui aussi avoir l'une ou l'autre des deux dits signes algébriques,
ledit ordre de succession devant être choisi parmi les ordres de succession possibles en nombre n! (factorielle de n) de ces fibres, chaque tel ordre de succession possible des fibres étant associé à une dite succession de connexions elle-même associée à une succession de dits écarts de dispersion cumulés,
ce procédé étant caractérisé par le fait que, pour le choix de l'ordre de succession appliqué auxdites fibres, lesdites dispersions des fibres sont mesurées et il est considéré que chaque dite succession d'écarts de dispersion cumulés présente une valeur absolue maximale des écarts de dispersion cumulés, cette valeur absolue maximale des écarts de dispersion cumulée (VAMEDC) étant calculable, en fonction des dispersions mesurées, pour chaque tel ordre de succession possible de sorte que n! VAMEDC peuvent être calculées et qu'une moyenne de ces n! VAMEDC peut aussi être calculée, l'ordre de succession choisi pour les fibres étant tel que la VAMEDC calculable pour cet ordre est inférieure à 50 % de ladite moyenne des VAMEDC.

2. Procédé selon la revendication 1 caractérisé par le fait qu'il comporte, entre lesdites opérations de rassemblement et de raccordement, une opération de classement selon laquelle on classe les fibres en au moins quatre classes de dispersion disjointes comportant chacune les fibres dont les écarts de dispersion ont un signe algébrique ce cette classe et ont des valeurs absolues comprises entre une borne inférieure et une borne supérieure de cette classe, chaque classe d'un signe algébrique étant symétrique d'une autre classe ayant le signe algébrique opposé et les mêmes bornes inférieure et supérieure,
cette opération de classement étant suivie d'une opération d'appairage au cours de laquelle 80 % au moins desdites fibres sont appariées en paires de régularisation de dispersion, chacune de ces paires étant constituée de deux fibres qui appartiennent respectivement à deux dites classes symétriques l'une de l'autre, ladite opération de raccordement raccordant directement l'une à l'autre les deux fibres de chaque paire.

3. Procédé selon la revendication 1, caractérisé par le fait que :
- on groupe les fibres de la ligne à réaliser en paires telles que les deux fibres d'une même paire présentent des dispersions chromatiques sensiblement symétriques par rapport à une valeur moyenne de la dispersion chromatique des fibres de la ligne,
- et on raccorde lesdites fibres en série en raccordant de manière consécutive les deux fibres de chaque dite paire.

4. Procédé selon la revendication 1 caractérisé par le fait que, 80 % au moins desdites connexions constituant des connexions à régularisation de dispersion, on fait suivre chaque connexion à régularisation de dispersion d'une fibre présentant un écart de dispersion de signe opposé à celui de l'écart de dispersion cumulé associé à cette connexion.

5. Ligne de communication optique à grande distance, cette ligne étant caractérisée par le fait qu'elle est susceptible d'être obtenue par le procédé de réalisation selon l'une quelconque des revendications 1 à 4.

## Patentansprüche

1. Verfahren zur Herstellung einer optischen Fernübertragungsleitung, welches die folgenden Schritte umfaßt:
- Zusammensetzen von optischen Fasern in einer 100 überschreitenden Anzahl n, welche im wesentlichen gleiche Länge aufweisen und die ein nachfolgendes Bilden der Leitung durch Verbinden der Fasern in Serie ermöglichen, wobei jede der Fasern eine für diese Fasern charakteristische chromatische Dispersion der Art aufweist, daß die Gesamtheit der Fasern eine mittlere Dispersion aufweist und daß die Dispersionen dieser Fasern, wenigstens für eine Mehrheit derselben, Abweichungen der Dispersionen im Vergleich zum mittleren Wert aufweisen, welche Abweichungen Absolutwerte aufweisen und von welchen die einen positive algebraische Vorzeichen und die anderen negative algebraische Vorzeichen aufweisen,
- Verbinden der Fasern in Serie, indem gleichzeitig eine Aufeinanderfolge von Fasern gebildet wird, die ausgehend von einem Ursprung dieser Leitung eine Reihenfolge der Aufeinanderfolge darstellt, und eine der Aufeinanderfolge der Fasern zugeordnete Aufeinanderfolge von Verbindungen gebildet wird, wobei zwei beliebige aufeinanderfolgende Fasern durch eine Verbindung verbunden sind, wobei eine beliebige Faser einer vorhergehenden Verbindung sowie einer vorhergehenden Faser folgt und einer nachfolgenden Verbindung sowie einer nachfolgenden Faser vorhergeht, derart daß jeder Verbindung eine Abweichung der kumulierten Dispersion zugeordnet ist, welche durch die algebraische Summe der Dispersionsabweichungen der zwischen dem Ursprung und dieser Verbindung angeordneten Fasern gebildet ist und die das eine oder das andere der zwei algebraischen Vorzeichen aufweisen kann,
wobei die Reihenfolge der Aufeinanderfolge unter den möglichen Reihenfolgen der Aufeinanderfolge mit der Anzahl n! (n Fakultät) dieser Fasern ausgewählt sein muß, wobei jeder möglichen Aufeinanderfolge der Fasern eine Aufeinanderfolge der Verbindungen zugeordnet ist, der ihrerseits eine Aufeinanderfolge der kumulierten Dispersionsabweichungen zugeordnet ist,
welches Verfahren dadurch gekennzeichnet ist, daß für die Auswahl der Reihenfolge der Fasern-Aufeinanderfolge die Dispersionen der Fasern gemessen werden und berücksichtigt wird, daß jede Aufeinanderfolge von kumulierten Dispersionsabweichungen einen maximalen Absolutwert der kumulierten Dispersionsabweichungen aufweist, welcher maximale Absolutwert der kumulierten Dispersionsabweichungen (VAMEDC) in Abhängigkeit von den gemessenen Dispersionen für jede mögliche Reihenfolge der Aufeinanderfolge berechenbar ist, derart, daß n! VAMEDC und ein Mittelwert dieser n! VAMEDC errechenbar ist, wobei die gewählte Reihenfolge der Fasern-Aufeinanderfolge eine solche ist, daß der errechnete VAMEDC für diese Ordnung weniger als 50% des Mittelwertes der VAMEDC beträgt.

2. Verfahren nach Anspruch 1, **dadurch gekennzeichnet,** daß es zwischen den Schritten des Zusammensetzens und des Verbindens einen Schritt der Klassifizierung umfaßt, gemäß welchem die Fasern in zumindest vier getrennten Dispersionsklassen klassifiziert werden, von welchen jede die Fasern umfäßt, deren Abweichungen der Dispersion ein algebraisches Vorzeichen dieser Klasse aufweisen und Absolutwerte aufweisen, die zwischen einer unteren Grenze und einer oberen Grenze dieser Klasse liegen, wobei jede Klasse eines algebraischen Vorzeichens symmetrisch zu einer anderen Klasse mit entgegengesetztem algebraischen Vorzeichen und denselben unteren und oberen Grenzen ist,
wobei der Schritt der Klassifizierung von einem Schritt der Paarung gefolgt wird, mit welchem mindestens 80% der Fasern in Dispersions-Ausgleichspaaren paarweise zusammengestellt werden, wobei jedes dieser Paare aus zwei Fasern gebildet wird, die jeweils der einen bzw. der anderen der zwei symmetrischen Klassen angehören, wobei der Schritt des Verbindens unmittelbar die eine mit der anderen der zwei Fasern jedes Paares verbindet.

3. Verfahren nach Anspruch 1, **dadurch gekennzeichnet**, daß :
- die Fasern der Leitung derart in Paaren gruppiert werden, daß die zwei Fasern desselben Paares chromatische Dispersionen aufweisen, die im wesentlichen symmetrisch bezüglich eines Mittelwertes der chromatischen Dispersion der Fasern der Leitung sind,
- und daß die Fasern in Serie verbunden werden, indem in aufeinanderfolgender Weise die zwei Fasern jedes Paares verbunden werden.

4. Verfahren nach Anspruch 1, **dadurch gekennzeichnet,** daß wenigstens 80% der Verbindungen Dispersions-Ausgleichsverbindungen sind, und daß jeder Dispersions-Ausgleichsverbindung eine Faser nachgeordnet wird, welche eine Dispersionsabweichung mit einem Vorzeichen aufweist, das dem Vorzeichen der dieser Verbindung zugeordneten, kumulierten Dispersionsabweichung entgegengesetzt ist.

5. Optische Fernübertragungsleitung, dadurch gekennzeichnet ist, daß sie durch das Herstellungsverfahren gemäß einem der Ansprüche 1 bis 4 hergestellt ist.

## Claims

1. Method of manufacturing a long-haul optical communication line comprising the following operations:
- grouping together a number n more than one hundred of optical fibres having substantially the same length and to constitute subsequently said line by connection of said fibres in series, each of said fibres having its own inherent chromatic dispersion so that the set of said fibres has a mean dispersion and the dispersions of at least a majority of said fibres have dispersion offsets relative to said mean value which have absolute values and some a positive algebraic sign and the others a negative algebraic sign, and
- connecting said fibres in series to form a succession of fibres having an order of succession from an origin of said line and a succession of connections associated with the succession of said fibres, any two consecutive fibres being connected by a connection, any fibre following on from a previous connection and a previous fibre and preceding a subsequent connection and a subsequent fibre so that each connection is associated with a cumulative dispersion offset which is the algebraic sum of the dispersion offsets of the fibres between said origin and said connection and which can also have one or other of said two algebraic signs,
said order of succession having to be chosen from the n! (factorial n) possible orders of succession of the fibres, each such possible order of succession of the fibres being associated with one of said successions of connections itself associated with a succession of said cumulative dispersion spreads,
this method being characterised in that, for choosing the order of succession applied to said fibres, said dispersions of the fibres are measured and each said succession of cumulative dispersion spreads is deemed to represent a maximal absolute value of the cumulative dispersion spreads, this maximal absolute value of the cumulative dispersion spreads (VAMEDC) being calculable, as a function of the measured dispersions, for each such possible order of succession so that n! VAMEDC can be calculated and a mean of these n! VAMEDC can also be calculated, the order of succession being chosen for the fibres such that the VAMEDC calculable for this order is less than 50% of said mean of the VAMEDC.

2. Method according to claim 1 characterised in that it comprises between said grouping and connection operations a classification operation whereby the fibres are classified into at least four separate dispersion classes each comprising the fibres whose dispersion offsets have an algebraic sign of said class and absolute values between a lower limit and an upper limit of said class, each class of one algebraic sign being symmetrical to another class of the opposite algebraic sign having the same upper and lower limits,
said classification operation being followed by a pairing operation in which at least 80% of said fibres are grouped into dispersion regularising pairs each comprising two fibres which respectively belong to two respective classes symmetrical to each other, said connecting operation connecting the two fibres of each pair directly to each other.

3. Method according to claim 1 characterised in that:
- the fibres of the line to be manufactured are grouped in pairs such that the two fibres of the same pair have chromatic dispersions substantially symmetrical to a mean value of the chromatic dispersion of the fibres of the line, and
- said fibres are connected in series by connecting consecutively the two fibres of each pair.

4. Method according to claim 1 characterised in that at least 80% of said connections constituting dispersion regularisation connections, each dispersion regularisation connection is followed by a fibre having a dispersion spread of the opposite side to that of the cumulative dispersion spread associated with that connection.

5. Long-haul optical communication line characterised in that it can be obtained by the method of manufacture according to any one of claims 1 to 4.
